# EUROPEAN PATENT APPLICATION

(11) **EP 2 394 764 A1**
(43) Date of publication of application: **14.12.2011**
(21) Application number: 11169652.2
(22) Date of filing: 10.06.2011
(51) Int. Cl.: B23B 39/16, B27C 3/04, B23Q 39/02, B27C 9/04, B27M 1/08

(54) **Drilling head for drilling components of wood or similar**

(30) Priority: 10.06.2010 IT BO20100365
(71) Applicant: BIESSE S.p.A., Pesaro (IT)
(72) Inventor: Bernardi, Paolo, 47841 CATTOLICA (IT)
(74) Representative: Jorio, Paolo

(57) **Abstract**

A drilling head for drilling components (2) of wood or similar, and having a number of first tool chucks (21, 28) fitted in rotary manner to a first supporting frame (20); and at least one second tool chuck (38) fitted in rotary manner to a second supporting frame (36) in turn connected in rotary manner to the first supporting frame (20) to orient the second tool chuck (38) about a given axis of rotation (37).

## Description

The present invention relates to a drilling head for drilling components of wood or similar.

In the woodworking industry, a machine is used comprising an elongated base with two longitudinal guide members parallel to a substantially horizontal first direction; a number of cross members mounted between the longitudinal guide members, parallel to a substantially horizontal second direction crosswise to the first direction; at least one clamp fitted to each cross member to receive and retain at least one component; and a bridge crane, which extends over the base, in the second direction, is movable along the base in the first direction, and is fitted with an operating head for working the components.

The operating head is normally movable in a third direction perpendicular to the first and second direction, comprises at least one electric chuck for receiving and retaining a milling tool, and is equipped with at least one drilling assembly having a number of tool chucks for receiving and retaining respective drill bits, and which are fitted to a supporting frame to rotate about respective longitudinal axes parallel to the first and/or second and/or third direction.

Known machines of the above type for working components of wood or similar have several drawbacks, mainly due to the relatively poor versatility of the drilling assembly, which can only drill parallel to the first and/or second and/or third direction.

It is an object of the present invention to provide a drilling head for drilling components of wood or similar, designed to eliminate the above drawbacks, and which is cheap and easy to produce.

According to the present invention, there is provided a drilling head for drilling components of wood or similar, as claimed in the accompanying Claims.

A non-limiting embodiment of the present invention will be described by way of example with reference to the accompanying drawings, in which :
Figure 1 shows a schematic view in perspective, with parts removed for clarity, of a preferred embodiment of the machine according to the present invention;
Figure 2 shows a schematic, party sectioned side view, with parts removed for clarity, of a detail of the Figure 1 machine;
Figure 3 shows a schematic, partly sectioned side view, with parts removed for clarity, of a variation of the Figure 2 detail.

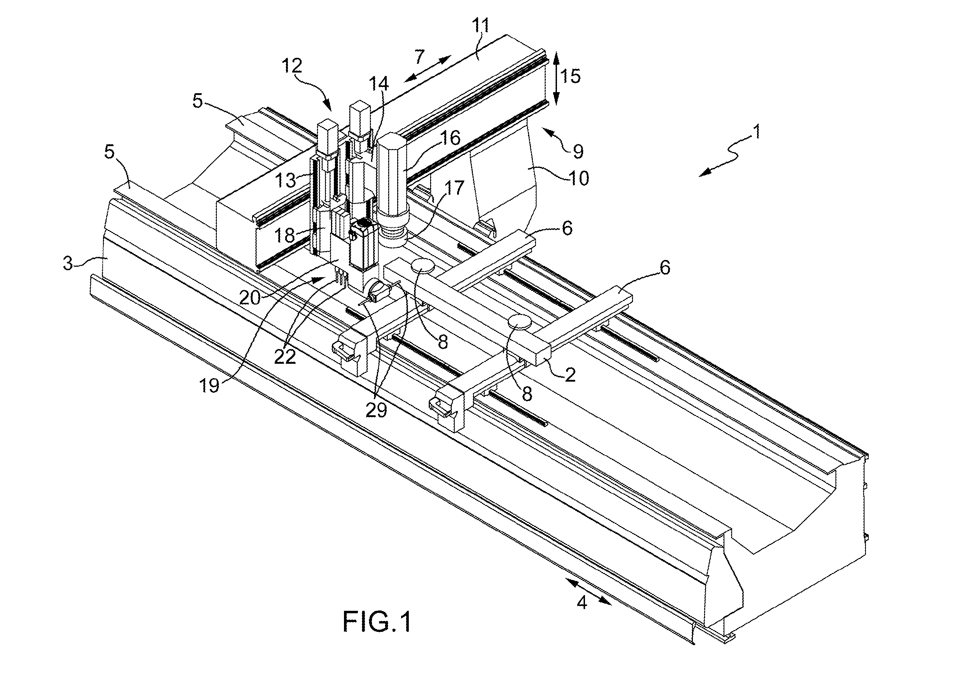

Number 1 in Figure 1 indicates as a whole a machine for working elongated components 2 of wood, and comprising an elongated, substantially U-shaped base 3, which extends in a horizontal direction 4, has two lateral longitudinal guide members 5 parallel to direction 4, and supports a number of cross members 6 - hereinafter referred to as 'work surfaces' - which extend between longitudinal members 5 in a horizontal direction 7 crosswise to direction 4, and are fitted to longitudinal members 5 to slide manually, or by means of respective known actuating devices (not shown), along longitudinal members 5 in direction 4.

Work surfaces 6 support a number of clamps 8 arranged on work surfaces 6 substantially according to the size of and the work to be performed on components 2, and which are movable between a clamped position and a release position clamping and releasing at least one component 2.

Base 3 also supports a bridge crane 9 comprising an upright 10, which is fitted in known manner to base 3, is movable straight along base 3 in direction 4 by a known actuating device (not shown), and is fitted on its free end with a cross member 11. extending over base 3 in direction 7.

Bridge crane 9 supports a known operating unit 12 comprising, in the example shown, a horizontal slide 13 fitted in known manner to cross member 11 and movable straight along cross member 11 in direction 7 by a known actuating device (not shown).

Unit 12 comprises a first vertical slide 14, which is fitted in known manner to slide 13, is movable straight along slide 13 in a vertical direction 15 perpendicular to directions 4 and 7 by a known actuating device (not shown), and supports an electric chuck 16 for receiving and retaining a milling tool 17 for working components 2.

Unit 12 also comprises a second vertical slide 18, which is fitted in known manner to slide 13, is movable straight along slide 13 in direction 15 by a knows actuating device (not shown.), and supports a drilling head 19.

Head 19 comprises a first supporting frame 20 fixed to slide 18; and a number of tool chucks 21 for receiving and retaining respective drill bits 22, and which are fitted to frame 20 to rotate, with respect to frame 20, about respective longitudinal axes 23 parallel to one another and to direction 15, and are slidable straight in direction 15, with respect to frame 20 and by respective actuating cylinders 24, between respective lowered work positions and respective raised rest positions.

Head 19 also comprises a known drilling assembly 25, in turn comprising a slide 26 fitted in known manner to frame 20 and movable straight in direction 15, with respect to frame 20 and by two actuating cylinders 27, between a lowered work position and a raised rest position; and three tool chucks 28 for receiving and retaining respective drill bits 29, and which are fitted in rotary and axially-fixed manner to slide 26 to rotate with respect to slide 26 about respective longitudinal axes 30 parallel to one another and to direction 15.

Chucks 21, 28 are rotated about respective axes 23, 30 by an actuating device 31 comprising an electric motor 32, which is fixed to frame 20, has a longitudinal axis 33 parallel to direction 15, and has an output shaft 34 connected to chucks 21, 28 by a known gear transmission 35.

Head 19 also comprises a substantially cylindrical second supporting frame 36, which is fitted to frame 20 to rotate, with respect to frame 20, about a horizontal axis of rotation 37 crosswise to axis 33, and is engaged in rotary manner by two coaxial tool chucks 38 for receiving and retaining respective opposite drill bits 39, and which are mounted to rotate about an axis of rotation 40 perpendicular to axis 37.

Frame 36 is fixed to the rotor of an annular electric motor 41 housed, coaxially with axis 37, inside frame 20; and chucks 38 are rotated by motor 32 about axis 40 via a gear transmission 42.

Transmission 42 comprises a transmission shaft 43, which extends through motor 41, coaxially with axis 37, is connected to frames 20 and 36 to rotate about axis 37, and is connected by two bevel gears 44 to an intermediate shaft 45 of transmission 35, and by a train of bevel gears 46 to chucks 38.

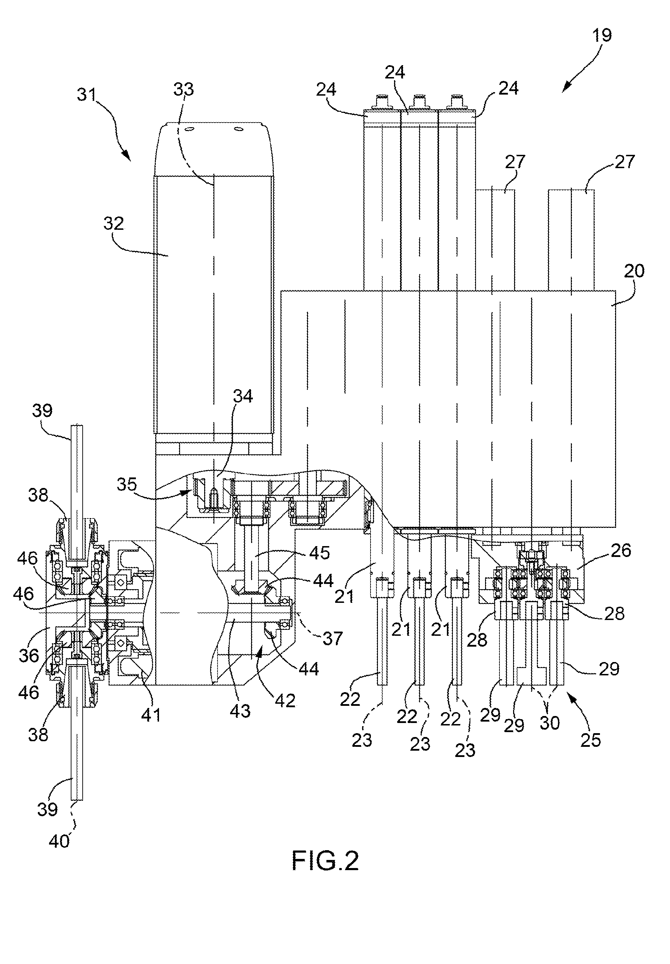

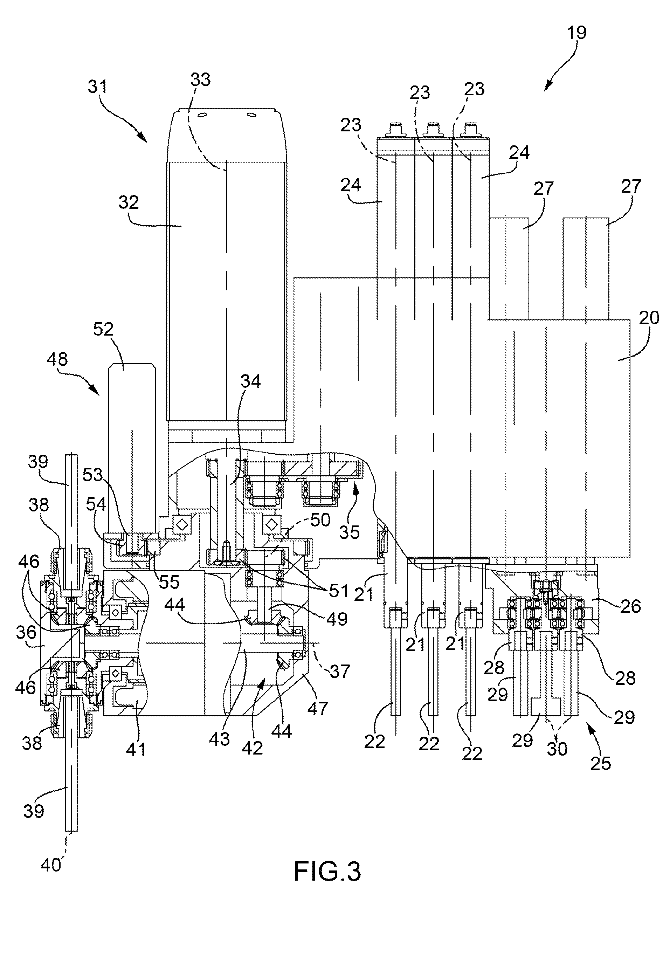

The Figure 3 variation differs from the Figure 1 and 2 embodiment solely in that :
frame 36 is fitted in rotary manner to a third supporting frame 47, in turn fitted to frame 20 to rotate about axis 33 with respect to frame 20 and under the control of an actuating device 48;
shaft 43 is connected in rotary manner to frames 36 and 47; and
transmission 42 comprises an intermediate shaft 49, which is housed in frame 47, is fitted to frame 47 to rotate, with respect to frame 47, about its own longitudinal axis 50 parallel to axis 33, and is connected by two cylindrical gears 51 to shaft 34 of motor 32, and by gears 44 to shaft 43.

Device 48 comprises an electric motor 52 fixed to frame 20, parallel to direction 15, and having an output shaft 53 fitted with a cylindrical gear 54, which meshes with an annular sprocket 55 fitted to frame 47 and coaxial with axis 33.

Bits 39 being powered by the same actuating device 31 as bits 22 and 29, and being oriented about axis 37 (Figure 2) or axes 33 and 37 (Figure 3), head 19 is relatively simple in design, cheap to produce, and much more versatile than conventional drilling heads.

## Claims

1. A drilling head for drilling components (2) of wood or similar, and comprising a first supporting frame (20); a number of first tool chucks (21, 28) for receiving and retaining respective drill bits (22, 29) and fitted to the first supporting frame (20) to rotate about respective substantially parallel first longitudinal axes (23, 30); a first electric motor (32) fitted to the first supporting frame (20); and first transmission means (35) connecting the first electric motor (32) to the first tool chucks (21, 28); the drilling head being **characterized by** also comprising a second supporting frame (36) mounted to rotate, with respect to the first supporting frame (20), about a first axis of rotation (37); and at least one second tool chuck (38) for receiving and retaining a drill bit (39), and fitted to the second supporting frame (36) to rotate about a second longitudinal axis (40).

2. A drilling head as claimed in Claim 1, and also comprising second transmission means (42) connecting the first electric motor (32) to the second tool chuck (38).

3. A drilling head as claimed in Claim 1 or 2, and also comprising a second electric motor (41) for moving the second supporting frame (36) about the first axis of rotation (37).

4. A drilling head as claimed in any one of the foregoing Claims, wherein the first axis of rotation (37) is crosswise to said first longitudinal axes (23, 30).

5. A drilling head as claimed in any one of the foregoing Claims, and also comprising a third supporting frame (47) mounted between said first and second supporting frame (20, 36) to rotate with respect to the first supporting frame (20) about a second axis of rotation (33); the second supporting frame (36) being connected to the third supporting frame (47) to rotate about said first axis of rotation (37).

6. A drilling head as claimed in Claim 5, wherein the second axis of rotation (33) is parallel to the first longitudinal axes (23, 30).

7. A drilling head as claimed in Claim 5 or 6, and also comprising a third electric motor (52) for moving the third supporting frame (47) about the second axis of rotation (33).

8. A drilling head as claimed in any one of the foregoing Claims, wherein the first axis of rotation (37) is crosswise to said second longitudinal axis (40).

9. A machine for working components (2) of wood or similar, and comprising a base (3); clamping means (8) fitted to the base (3) to retain at least one component (2); and a drilling head (19) as claimed in any one of Claims 1 to 8.
